# EUROPÄISCHE PATENTANMELDUNG

(11) **EP 0 607 617 A1**
(43) Veröffentlichungstag der Anmeldung: **27.07.1994**
(21) Anmeldenummer: 93121057.9
(22) Anmeldetag: 30.12.1993
(51) Int. Cl.: B60P 3/06, B62D 53/06

(54) **Tieflader**

(30) Priorität: 18.01.1993 DE 9300565 U
(71) Anmelder: Fliegl, Helmut, D-07819 Triptis (DE)
(72) Erfinder: Fliegl, Helmut, D-07819 Triptis (DE)
(74) Vertreter: Seidel, Herta, Dipl.-Phys.

(57) **Zusammenfassung**

Bei einem Tieflader mit einer Ladefläche (1), umfassend eine Mittelplattform (3) und zwei parallel dazu verlaufende Seitenbereiche (4,5) die sogenannten Fahrgassen, sind zumindest der zwischen Vorder- und Hinterrädern befindliche Teilbereich der Ladefläche (1), vorzugsweise die zwischen den Vorder- und Hinterrädern beidseitig der Mittelplattform (3) verlaufenden Bereiche der Fahrgassen (4a,5a), auf- und absenkbar ausgebildet.

## Beschreibung

Die Erfindung betrifft einen Tieflader mit einer Ladefläche, umfassend eine Mittelplattform und Zwei parallel dazu verlaufende Seitenbereiche, die sogenannten Fahrgassen.

Die Ladeflächen der herkömmlichen Tieflader bestehen in der Regel aus quer über die Fahrzeugbreite verlaufenden Holzplatten, die durch Nut-Feder-Profile miteinander verbunden sind. Diese Platten liegen auf einer Mehrzahl von Querträgern auf, die ihrerseits mit einem aus Längsträgern gebildeten Rahmen verbunden sind. Die Ladefläche ist durch einen Mittelbereich und zwei parallel dazu verlaufende Außenbereiche, die sogenannten Fahrgassen gebildet. Eine Heckanschrägung an die die Auffahrrampe angelenkt werden kann, ist starr mit der Ladefläche verbunden. An ihrem zum Zugfahrzeug hinweisenden Endbereich bildet die Ladefläche einen sogenannten Höcker, der über die Vorderräder des Tiefladers in einem geringen Abstand von diesem verläuft.

Es hat sich nun gezeigt, daß die Höhe zahlreicher auf einem Tieflader zu transportierenden Maschinen, wie Radlader, Kettenbagger, Bagger, Mischer, Lastkraftwagen und Spezialtransporter usw. in Verbindung mit dem Tieflader eine Gesamthöhe aufweisen, die nicht durch alle in der Landschaft vorgesehene Unterführungen hindurchgefahren werden kann, so daß man gezwungen ist, Umwege in Kauf zu nehmen, um auf Straßen zum gewünschten Ziel zu kommen, deren Unterführungen bzw. Brücken eine ausreichende lichte Höhe zum Straßenbelag aufweisen. Der Erfindung liegt nun die Aufgabe zugrunde, einen Tieflader zu schaffen, bei dem dieser Nachteil nicht mehr so oft in Kauf genommen werden muß.
Diese Aufgabe wird dadurch gelöst, daß zumindest der zwischen Vorder- und Hinterrädern befindliche Teilbereich der Ladefläche, vorzugsweise die Zwischern den Vorder- und Hinterrädern beidseitig der Mittelplattform verlaufenden Bereiche der Fahrgassen, auf- und absenkbar ausgebildet sind.
Mit einem solchen Tieflader sind zwei Einsatzmöglichkeiten gegeben: Im abgesenkten Zustand, Tiefladertransporte und bei gehobener Arbeitsfläche normale Transporte wie für Paletten, Container, PKW's usw.

Weitere konstruktive Merkmale, die zu einer vorteilhaften und vorzugsweisen Ausbildung des erfindungsgemäßen Tiefladers beitragen, ergeben sich aus den Unteransprüchen und der nachstehenden Beschreibung eines Ausführungsbeispieles anhand der Zeichnung. Hierin zeigen:

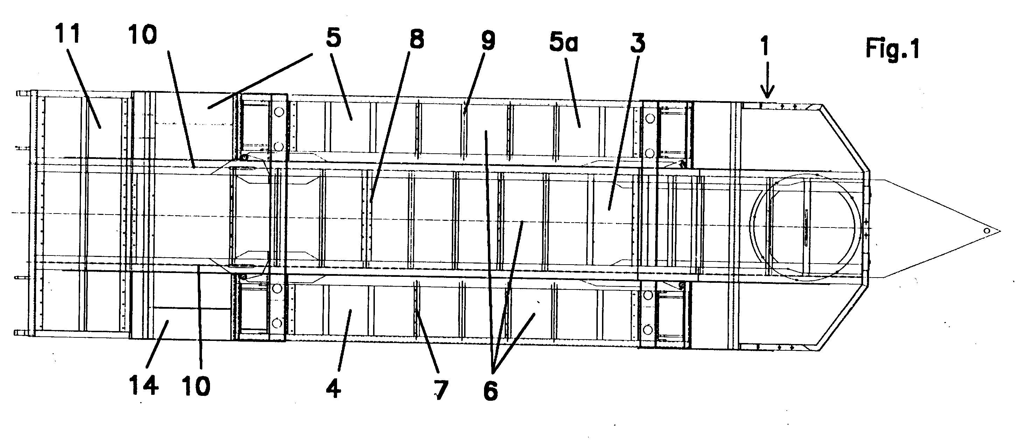

- Fig. 1: eine Draufsicht auf die Ladefläche eines erfindungsgemäßen Tiefladers,
- Fig. 2: eine Seitenansicht des Tiefladers nach Fig 1 in Beladestellung mit einem auf die Ladefläche aufgefahrenen Bagger,
- Fig. 3: eine Seitenansicht des Tiefladers nach Fig. 1 und 2 mit erfindungsgemäß für den Transport des Baggers abgesenkten Fahrgassen und
- Fig. 4: eine Unteransicht der Ladefläche mit dem Verlauf der Steuerhydraulik.

Sich entsprechende Teile in den Figuren sind mit übereinstimmenden Bezugszeichen gekennzeichnet.

Die Ladefläche 1 eines erfindungsgemäßen Tiefladers 2 umfaßt einen Mittelbereich 3 und zwei Seitenbereiche 4 und 5, die sogenannten Fahrgassen Jeder Bereich 3,4 und 5 ist durch Holzplatten 6 gebildet, die durch Nut-Feder-Profile miteinander verbunden sind. Die Holzplatten 6 liegen auf voneinander getrennten Querträgern 7, 8 und 9 auf, die dem Mittelbereich 3 bzw. den Seitenbereichen 4 und 5 zugeordnet sind,miteinander fluchten, und quer nahezu über die gesamte Ladefläche 1 verlaufen. Die Querträger 7, 8, 9 sind ihrerseits mit einem Rahmen des Tiefladers 2 , gebildet aus Längsträgern 10, verschweißt.

Die Ladefläche 1 ist an ihrem hinteren Ende starr mit einer Heckabschrägung 11 verbunden, an der eine nicht dargestellte Auffahrtsrampe bei 12 gelenkig befestigt werden kann. Der Mittelbereich 3 steigt zu seinem vorderen Ende hin, das zum nicht dargestellten Zugfahrzeug hingerichtet ist, in Form eines sogenannten Höckers 13 schräg an und verläuft anschließend waagerecht zum vorderen Ende des Tiefladers 2. Die Heckabschrägung 11 der Seitenbereiche 4 und 5 ist mit am Rahmen 10 angeschweißten Blechteilen 14 verbunden, die zunächst in einem waagerechten Abschnitt 14a in geringem Abstand über den Hinterrädern 15a des Tiefladers 2 verlaufen und dann in einem der Radform angepaßten, nach unten gekrümmten Krümmungsteil 14 enden. Am unteren Ende tragen die Krümmungsteile 14b einen Anschlag 16, dessen Aufgabe nachstehend erläutert wird.

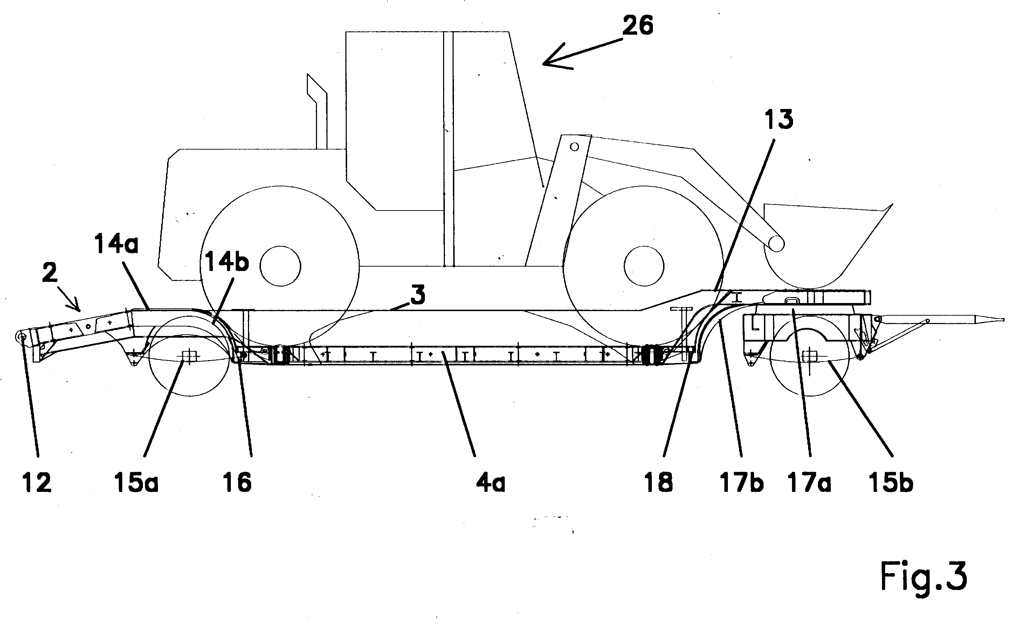

Die vorderen Endbereiche der Seitenbereiche 4 und 5 überragen in einem geringen Abstand die Vorderräder 15b des Tiefladers 2 und sind jeweils ebenfalls mit einem Blechteil 17 verbunden, das entsprechend dem Blechteil 14 aus einem waagerechten Abschnitt 17a und einem nach unten gekrümmt verlaufenden Abschnitt 17b gebildet und mit dem Rahmen 10 des Tiefladers 2 verschweißt ist. Das untere Ende des gekrümmten Abschnittes 17b trägt auch einen Anschlag 18, der auf gleicher Höhe wie der Anschlag 16 liegt und die Aufgabe hat, die zwischen den Blechteilen 14 und 17 verlaufenden, auf- und abbewegbaren Bereiche 4a bzw. 5a der Fahrgassen 4 und 5 in ihrer abgesenkten Stellung, siehe Fig. 3, zu unterstützen.

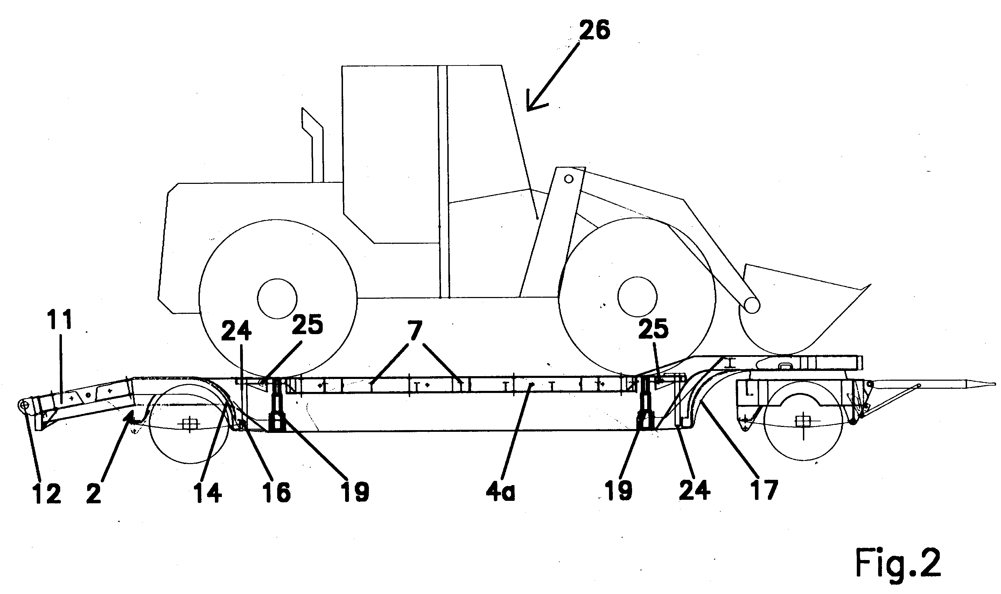

Wie aus Fig. 2 ersichtlich, befinden sich die Abschnitte 4a bzw. 5a beim Beladevorgang des Tiefladers 2 auf etwa gleicher Höhe wie die waagerechten Abschnitte der Bleche 14. Sie werden in dieser angehobenen Stellung von Hydraulikzylindern 19 gehalten, die vom Zugfahrzeug aus die Öldruckversorgung erhalten.

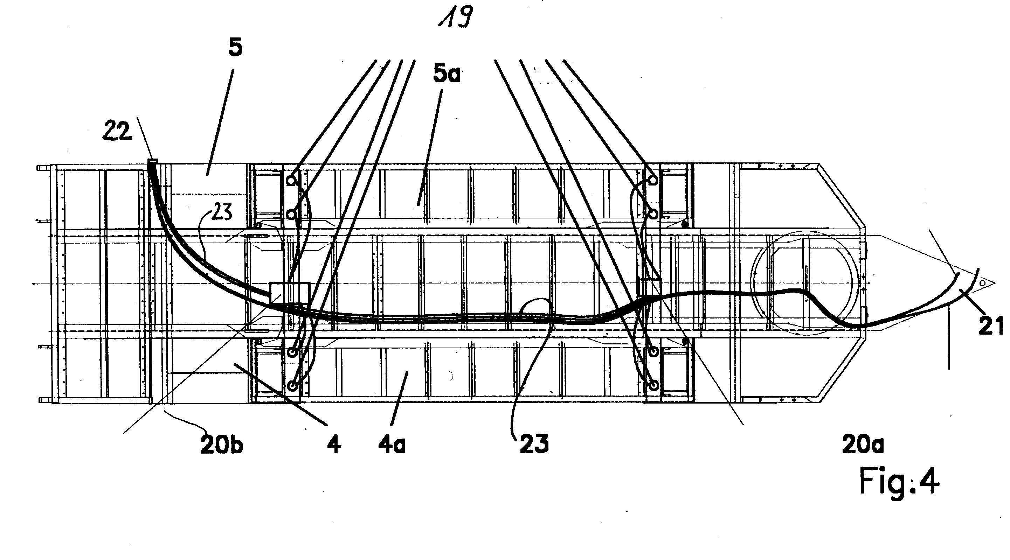

Im Beispiel sind, wie aus Fig. 4 ersichtlich, jedem mittleren Seitenbereich 4a bzw. 5a vier Hydraulikzylinder 19 zugeordnet und zwar jeweils zwei Zylinder 19 für das vordere und das hintere Ende des auf- und abbewegbaren Abschnittes 4a bzw. 5a der Fahrgassen 4,5. Zwei Mengenteiler 20a, b, zu denen von einem mit der Hydraulikleitung 21 verbundenen Steuergerät 22 aus verlaufende Leitungen 23 führen, haben die Aufgabe, die in der Druckleitung 21 vorhandene Ölmenge so zu unterteilen, daß das Niveau der Mittelabschnitte 4a,5a der Fahrgassen 4,5 während der Auf- und Abbewegungen waagerecht bleibt. Der Mengenteiler 20, der dem vorderen Ende der Seitenbereiche 4a,5a zugeordnet ist, ist parallel zu dem Mengenteiler 20b des hinteren Endes der Seitenbereiche 4a, 5a geschaltet.

Zusätzlich sind an dem vorderen und hinteren Ende der Abschnitte 4a bzw. 5a klappbare Stützfüße 24a angeordnet, die an ihrem einen Ende gelenkig bei 25 mit dem Abschnitt 4a bzw. 5a der Fahrgassen 4 bzw. 5 verbunden sind und mit ihrem freien Ende auf den an den Blechteilen 14 bzw. 17 vorgesehenen Anschlägen 16 bzw. 18 aufliegen.

Sobald der Beladevorgang abgeschlossen ist und im Beispiel ein Radlader 26 auf den Fahrgassenmittelabschnitten 4a,5a (Auf- bzw. Senkbereich) der Ladefläche 1 arretiert ist, werden von dem LKW-Fahrer die Stützfüße 24 eingeklappt und über das Steuergerät 22 die Hydraulikzylinder 19 entlastet (Absenkzustand). Die Abschnitte 4a und 5a der Fahrgassen 4,5 senken sich zusammen mit dem Radlader 26 ab, bis sich ihre Enden auf die Anschläge 16 und 18 auflegen.

Der gekrümmte Verlauf der Bleche 14 und 17 erweist sich hierbei als sinnvoll, da hierdurch der mögliche Achsabstand eines Ladegutes, hier des Radladers 26, maximiert wird. Siehe Fig. 3.

Die Gesamtabsenkung der Abschnitte 4a, 5a ist so bemessen, daß die erforderliche Bodenfreiheit der Unterkante der Mittelbereiche der Fahrgassen 4,5 gewahrt ist.

Sobald der Zielort erreicht ist, werden durch entsprechende Steuerung durch den LKW-Fahrer die Hydraulikzylinder 19 wieder ausgefahren. Damit heben sich die abgesenkten Abschnitte 4a und 5a der Fahrgassen 4,5 zusammen mit dem Radlader 26 an, die Stützfüße 24 können von Hand ausgeklappt und auf den Anschlägen 16 bzw. 18 abgestützt werden. Das Niveau der Abschnitte 4a und 5a ist dann wieder höhengleich mit den sich anschließenden Abschnitten 14a der Blechteile 14. Der Radlader 26 kann über die Heckabschrägung 11 und die sich daran anschließende Auffahrtsrampe von der Ladefläche 1 des Tiefladers heruntergefahren werden.

## Patentansprüche

1. Tieflader mit einer Ladefläche, umfassend eine Mittelplattform und zwei parallel dazu verlaufende Seitenbereiche, die sogenannten Fahrgassen, **dadurch gekennzeichnet**, daß zumindest der zwischen Vorder- und Hinterrädern (15a,b) befindliche Teilbereich der Ladefläche (1), vorzugsweise die zwischen den Vorder- und Hinterrädern beidseitig der Mittelplattform (3) verlaufenden Bereiche der Fahrgassen (4a, 5a), auf- und absenkbar ausgebildet sind.

2. Tieflader nach Anspruch 1, **dadurch gekennzeichnet**, daß zumindest ein Teil der Mittelplattform (3) und der beiden Fahrgassen (4,5) voneinander unabhängig an einem Rahmenteil (10) des Tiefladers (2) angeordnet sind.

3. Tieflader nach Anspruch 1 oder 2, **dadurch gekennzeichnet**, daß für die Auf- und Abbewegung der Fahrgassenabschnitte (4a,5a) hydraulische Zylinder (19) vorgesehen sind, die von einem Zugfahrzeug aus steuerbar sind.

4. Tieflader nach einem der Ansprüche 1 bis 3, **dadurch gekennzeichnet**, daß starr an unbeweglichen Rahmenabschnitten (10, 14b, 17b) angeordnete Anschläge (16, 18,) vorgesehen sind, auf denen die Plattformbereiche (4a, 5a) der Fahrgassen (4, 5) im abgesenkten Zustand aufliegen.

5. Tieflader nach einem der vorhergehenden Anspruche, **dadurch gekennzeichnet**, daß klappbare Stützfüße (24) vorgesehen sind, die an den Plattformbereichen (4a,5a) der Fahrgassen (4, 5) angelenkt sind und bei angehobener Lage der Fahrgassenplattformen (4a,5a) nach unten geklappt,mit ihrem freien Ende auf den Anschlägen (16,18) aufliegen.

6. Tieflader nach einem der vorhergehenden Ansprüche, **dadurch gekennzeichnet**, daß Radüberfahrbereiche (14,17) der Ladefläche (1) durch Bleche gebildet sind, deren waagerechte in Höhe der Mittelplattform liegende Bereiche (14a, 17a) an ihren in den zwischen den Vorder- und Hinterrändern (15a,b) liegenden Bereich ragenden Enden (14b, 17b) nach unten gekrümmt verlaufen und an ihrem unteren Ende die Anschläge (16,18) für die abgesenkten Plattformbereiche (4a,5a) der Fahrgassen (4,5) tragen.

7. Tieflader nach einem der vorhergehenden Ansprüche, **dadurch gekennzeichnet**, daß die Bleche (14,17) der Radüberfahrbereiche am Rahmen (10) des Tiefladers (2) angeschweißt sind.

8. Tieflader nach einem der vorhergehenden Ansprüche, **dadurch gekennzeichnet**, daß die Betätigungshydraulik für die Plattformbereiche (4a, 5a) der Fahrgassen (4,5) ein Steuergerät (22) umfaßt, die die vom Zugfahrzeug einschaltbare Ölversorgung mit dem vorderen, bzw. dem hinteren Hebebereich zugeordneten, parallel zueinander geschalteten Mengenteilern (19) verbindet, um eine waagerechte Auf- und Abbewegung der Plattformbereiche (4a,5a) der Fahrgassen (4,5) zu bewirken.
